(19) Europäisches Patentamt
European Patent Office
Office européen des brevets

(11) Veröffentlichungsnummer : **0 033 949**
**B1**

(12) # EUROPÄISCHE PATENTSCHRIFT

(45) Veröffentlichungstag der Patentschrift : **22.06.83**

(51) Int. Cl.³ : **C 01 B 3/16**, B 01 J 31/26

(21) Anmeldenummer : **81100793.9**

(22) Anmeldetag : **05.02.81**

(54) **Verfahren zur Gewinnung von Wasserstoff aus Kohlenmonoxid und Wasser.**

(30) Priorität : **07.02.80 US 119264**

(43) Veröffentlichungstag der Anmeldung : **19.08.81 Patentblatt 81/33**

(45) Bekanntmachung des Hinweises auf die Patenterteilung : **22.06.83 Patentblatt 83/25**

(84) Benannte Vertragsstaaten : **AT BE CH DE FR GB IT LI LU NL SE**

(73) Patentinhaber : **Studiengesellschaft Kohle mbH**
**Kaiser-Wilhelm-Platz 1**
**D-4330 Mülheim/Ruhr (DE)**

(72) Erfinder : **Schanne, Lothar, Dr.**
**Calvinstrasse 16a**
**D-4330 Mülheim/Ruhr (DE)**
Erfinder : **Haenel, Matthias Walter, Dr.**
**Margarethenplatz 70**
**D-4330 Mülheim/Ruhr (DE)**

(74) Vertreter : **von Kreisler, Alek, Dipl.-Chem., et al**
**Deichmannhaus am Hauptbahnhof**
**D-5000 Köln 1 (DE)**

(56) Entgegenhaltungen :
**FR A 2 086 782**
**FR A 2 252 285**
**JOURNAL OF THE AMERICAN CHEMICAL SOCIETY, 100 : 9, 26 April 1978, R. B. KING et al. « Active homogeneous catalysts for the water gas shift reaction derived from the simple mononuclear carbonyls of iron, chromium, molybdenum, and tungsten », pages 2925-27**
**JOURNAL OF THE AMERICAN CHEMICAL SOCIETY, 102 : 3, 30. Januar 1980 A. D. KING et al. « Homogeneous catalysis of the water gas shift reaction using iron pentacarbonyl », pages 1028-32**

(56) Entgegenhaltungen :
**JOURNAL OF THE AMERICAN CHEMICAL SOCIETY, 101 : 20, 26. September 1979 Ch. UNGERMANN et al. « Homogeneous catalysis of the water gas shift reaction by ruthenium and other metal carbonyls. Studies in alkaline solutions », pages 5922-29**
**JOURNAL OF THE AMERICAN CHEMICAL SOCIETY, 99 : 25, 7. Dezember 1977, HICHUN KANG et al. « Reductions with carbon monoxide and water in place of hydrogen. I. Hydroformylation reaction and water gas shift reaction », pages 8323-25**

**EP 0 033 949 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Verfahren zur Gewinnung von Wasserstoff aus Kohlenmonoxid und Wasser

Die Erfindung betrifft ein Verfahren zur homogen-katalysierten Konvertierung von Kohlenmonoxid (CO) und Wasser ($H_2O$) zu Kohlendioxid ($CO_2$) und Wasserstoff ($H_2$), das bei geeigneter Wahl der Reaktionsparameter Umsätze von 85 bis 95 % bei kurzen Reaktionszeiten erlaubt.

Die Konversion von CO nach

$$CO + H_2O \rightleftharpoons CO_2 + H_2 \qquad (1)$$

dient der technischen Herstellung von Wasserstoff aus CO-reichen Produktgasen, welche durch Vergasen von Kohle oder Kohlenwasserstoffen erzeugt werden. Wegen der ungünstigen Gleichgewichtslage bei hohen Temperaturen muß Reaktion (1) unterhalb 500 °C durchgeführt werden. Allerdings ist die Gleichgewichtseinstellung in diesem Temperaturbereich extrem langsam, so daß hochaktive Katalysatoren zur Beschleunigung eingesetzt werden müssen. Zu diesem Zweck werden seit vielen Jahren feste Katalysatoren auf Eisen- oder Kupferbasis verwendet, welche bei Temperaturen um 350 bis 500 °C (Hochtemperatur- (HT)-Verfahren, Eisenkatalysatoren) und 210 bis 270 °C (Tieftemperatur- (TT)-Verfahren, Kupferkontakte) arbeiten. Mit dem Ziel, das hohe Temperaturniveau des HT-Verfahrens und die Kontaktgiftempfindlichkeit des TT-Verfahrens bei gleichzeitig vereinfachter verfahrenstechnischer Handhabung zu vermeiden, wurden in den letzten Jahren von verschiedenen Autoren Anstrengungen unternommen, lösliche, homogene Katalysatorsysteme zu entwickeln. (Literaturübersicht in C. Ungerman, V. Landis, S.A. Moya, H. Cohen, H. Walker, R.G. Pearson, R.G. Rinker und P.C. Ford, J. Amer. Chem. Soc. 101, 5922 (1979)).

Die Hauptkomponente der bisher bekannt gewordenen Systeme besteht meist aus einer Übergangsmetallcarbonylverbindung, welche in wasserhaltigen Lösungsmitteln bei CO-Drucken zwischen 0,25 und 300 bar und Temperaturen von 80 bis ca 180 °C getestet wurden.

Das von W. Reppe schon 1953 erwähnte (W. Reppe und Mitarbeiter, Lieb. Ann. Chem. 582, 121 (1953)) und von R.B. King (C.C. Frazier, R.M. Hanes, A.D. King, Jr. und R.B. King in Inorganic Compounds with Unusual Properties (R.B. King, editor), Bd. II, Kap. 9, Seite 94 ff, Advances in Chemistry Series 173, Am. Chem. Soc, Washington, D.C. und R.B. King et al J. Amer. Chem. Soc. 100, 2925 (1978)) und R. Pettit (R. Pettit, K. Cann, T. Cole, C.H. Mauldin und W. Slegeir in Inorganic Compounds with Unusual Properties (R.B. King, editor) Bd. II, Kap. 11, Seite 121 ff, Advances in Chemistry Series 173, Am. Chem. Soc. Washington, D.C. 1979) untersuchte, von Eisenpentacarbonyl ($Fe(CO)_5$) und Alkalien abgeleitete Katalysatorsystem ist in diesem Zusammenhang von Interesse. Die dabei bisher beobachteten Konversionsgeschwindigkeiten sind allerdings technisch uninteressant, da zu gering. Der wesentliche Nachteil liegt aber weiterhin darin begründet, daß Reaktion (1) unter diesen Bedingungen auch nach langen Reaktionszeiten nicht bis zur Einstellung des thermodynamischen Gleichgewichts abläuft, welches bei Wasserstoffausbeuten über 95 % liegt, sondern in unübersichtlicher Abhängigkeit von den Versuchsparametern unterhalb 40 % Wasserstoffausbeute stehen bleibt.

Die geringen Wasserstoffausbeuten lassen aber eine wirtschaftliche Anwendung des $Fe(CO)_5$-Alkali-Systems nicht zu.

Auf Seite 97 der oben genannten Literatur von C.C. Frazier et al zeigt die Tabelle II die Einwirkung von Druck und Temperatur auf die durch Eisenpentacarbonyl katalysierte Konvertierungsreaktion. Der Eisenpentacarbonyl-Katalysator wird in Butanol als Lösungsmittel verwendet, welches das zur Reaktion benötigte Wasser enthält. Bevorzugt werden gemäß dieser Literaturstelle Temperaturen zwischen 140 und 160 °C. In Versuchen 4 und 5 der Tabelle II werden Temperaturen von 181 °C und 183 °C angewandt. In der letzten Spalte der Tabelle werden die Reaktionsgeschwindigkeiten (Mol Wasserstoff/Mol Metall pro 6 Stunden) angegeben. Wie auf Seite 96, Zeilen 26 - 28 ausgeführt wird, stellen diese Zahlen lediglich die Geschwindigkeiten in einer frühen Stufe der Reaktion dar. In einer weiteren Veröffentlichung (A.D. King, Jr. R.B. King und D.B. Yang, J. Am. Chem. Soc. 102, 1028 (1980)) beschäftigen sich King et al ebenfalls mit der homogenen Katalyse der Konvertierung von Kohlenmonoxid und Wasser zu Kohlendioxid und Wasserstoff unter Verwendung von Eisenpentacarbonyl als Katalysator in hauptsächlich methanolischer Lösung. Aus der Fig. 4 auf S. 1003 geht hervor, daß die Reaktionsgeschwindigkeit nicht über die gesamte Reaktionszeit konstant ist (die Reaktionsgeschwindigkeit ist proportional der Steigung der Wasserstoffpartialdruck-Zeit-Kurve). Daraus folgt, daß die Reaktionsgeschwindigkeiten aus der Tabelle II von Frazier et al nicht verwendet werden können, um die zu erwartenden Wasserstoffausbeuten abzuschätzen. Versuch 6 (161 °C) und Versuch 9 (163 °C) der Tabelle II in der Veröffentlichung von Frazier et al werden ausführlicher beschrieben und in Form von Abbildungen I und II auf den Seiten 98 und 99 dieser Veröffentlichung beurteilt. Von den letzten gemessenen Punkten in diesen Abbildungen kann man berechnen, daß die Wasserstoffausbeute gemäß Versuch 6 nach 25 Stunden weniger als 40 % und in Versuch 9 nach 6 Stunden weniger als 24 % beträgt. Auf S. 100, 2. Absatz wird ausgeführt, daß die Geschwindigkeit der Wasserstoffproduktion mit der Erhöhung der Reaktionstemperatur steigt. Die im Anschluß daran gezeigte Abbildung 3 beweist nur, daß die Geschwindigkeit der Wasserstoffproduktion lediglich in den sehr frühen Stadien durch Steigerung der Temperatur erhöht werden kann, wenn der Partialdruck des während der Reaktion gebildeten Kohlenmonoxids vernachlässigbar ist. Einen Schluß

darauf, daß die erzielbaren Wasserstoffausbeuten auch am Ende der Reaktion durch Erhöhen der Temperatur erhöht werden können, kann daraus nicht gezogen werden.

Sowohl nach der Veröffentlichung von Frazier et al als auch nach der Veröffentlichung von King et al werden alkoholische Lösungen der Katalysatoren verwendet, die Wasser in geringerem Anteil enthalten. In der letzen Veröffentlichung von King auf S. 1030 linke Spalte, letzter Absatz wird sogar von der Verwendung von Wasser allein abgeraten, denn dort heißt es in Zeile 5, daß Wasser als Lösungsmittel eine sehr schlechte Wahl ist. Dazu muß auch Abb. 3 in derselben Spalte, unterste Kurve, betrachtet werden, woraus hervorgeht, daß bei 140 °C nach 70 Stunden weniger als 10 % Wasserstoffausbeute erreicht werden. Als Erklärung für dieses Ergebnis wird auf S. 1032, linke Spalte, letzter Absatz, die niedrige Löslichkeit von Kohlenmonoxid in Wasser und die damit verbundene Zersetzung des Katalysator-Systems angeführt.

Aus Vorstehendem folgt, daß der Stand der Technik bis unmittelbar vor dem Prioritätstag der vorliegenden Anmeldung dem Fachmann abriet, hobe Temperaturen und Wasser als Lösungsmittel für die Konvertierung von Kohlenmonoxid und Wasser zu Kohlendioxid und Wasserstoff zu verwenden.

Das vorliegende Verfahren beruht auf der überraschenden, nicht vorhersehbaren Beobachtung, daß wässrige, alkalische, vorzugsweise schwach alkalische Lösungen von $Fe(CO)_5$ bei Temperaturen über 220 °C und $H_2O$ in bis zu 95 %iger Ausbeute Kohlenmonoxid zu $CO_2$ und $H_2$ konvertieren. Dabei werden für eine Anwendung genügend hohe Reaktionsgeschwindigkeiten erst oberhalb 180 °C erreicht.

Gegenstand der Erfindung ist demnach ein Verfahren zur Herstellung von Wasserstoff durch homogen katalysierte Konvertierung von Kohlenmonoxid und Wasser zu Kohlendioxid und Wasserstoff unter Verwendung einer Carbonylverbindung der Metalle Fe, Co, Cr Mo und/oder W als Katalysator in Form einer wässrigen basischen Lösung, das dadurch gekennzeichnet ist, daß man Kohlenmonoxid mit Wasser und einem der genannten Metallcarbonyle bei Temperaturen von 190 bis 300 °C und bei Kohlenmonoxidpartialdrucken zwischen 40 und 500 bar umsetzt.

Völlig unerwartet ist das Temperaturverhalten des Systems : Zwischen 180 und 250 °C, in einigen Fällen bis 220 °C, läuft Reaktion (1) nicht bis zur vollständigen Konvertierung ab, sondern in Abhängigkeit von der Temperatur wird ein bestimmter, nicht zu überschreitender Maximalumsatz gefunden, der bei 180 °C um 40 % liegt und sich durch Temperaturerhöhung bis zu 95 % steigern läßt. Dieses überraschende Verhalten sei anhand der Druck-Temperatur- und Druck-Reaktionszeit-Diagramme in Abbildung 1 und 2 erläutert.

In Abbildung 1 beschreibt Kurve a den zu erwartenden Druck-Temperatur-Verlauf für den Fall eines inaktiven Systems (keine CO-Konvertierung, $H_2$-Ausbeute 0 %) ; sie wurde berechnet durch Addition dès idealen CO-Druckes (Gasgesetzt) und des jeweiligen Wasser-Dampfdruckes übèr der überschüssigen wässrigen Phase.

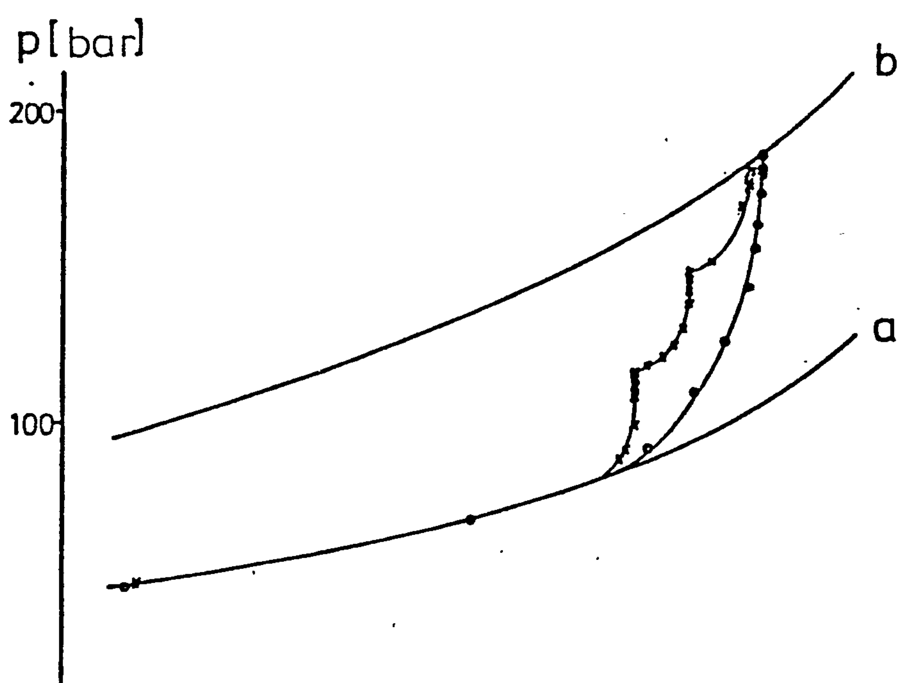

Abbildung 1

Bei vollständiger Konversion ($H_2$-Ausbeute 100 % entspricht doppelter Gasmenge) ergibt sich ganz analog Kurve b. Die eingetragenen experimentell gefundenen Meßpunkte (o) aus Tabelle 1 zeigen, daß in einem typischen Ansatz (CO-Anfangsdruck 48 bar) bei raschem kontinuierlichem Aufheizen des Autoklaven auf 222 °C die Reaktion ab etwa 180 °C merklich einsetzte und bis Erreichen der Endtemperatur zu hohem Konvertierungsgrad fortschritt. Abbildung 2 zeigt den entsprechenden Druck-Zeit-Verlauf, wobei der ausgezogene Bereich zwischen den Meßpunkten die isotherme Druckentwicklung nach Erreichen der Endtemperatur von 222 °C beschreibt. Wurde das System dagegen nur auf 181 °C erhitzt, (Meßpunkte (X) aus Tabelle 2), lief die Konvertierungsreaktion asymptotisch auf ein nach 5 bis 7 Stunden (Abbildung 2) erreichten Reaktionsdruck von 115 bar zu, der nach Abbildung 1 einem Umsatz von ungefähr 40 % entspricht.

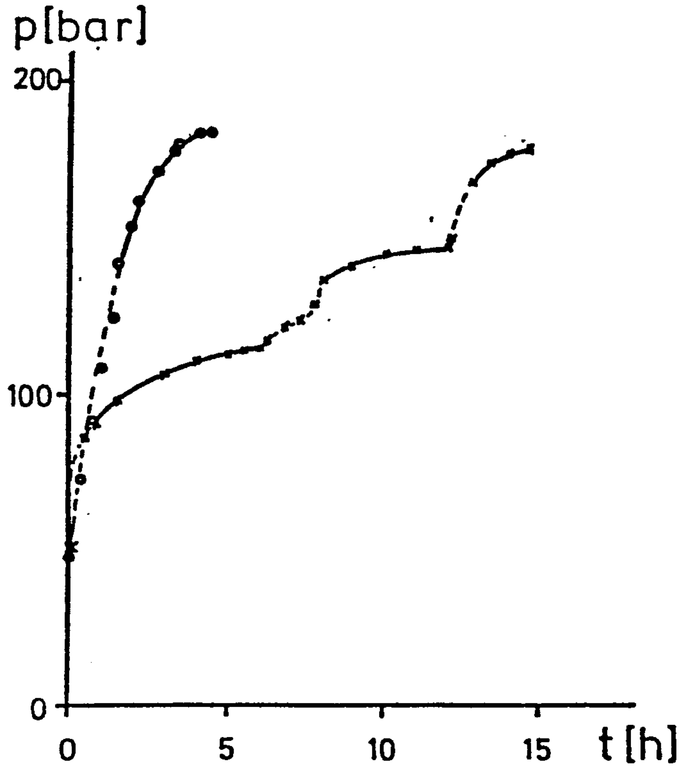


Abbildung 2

Weiteres Erhitzen auf 198 °C führte zu erneutem Einsetzen der Reaktion, bis nach weiteren 3 bis 4 Stunden bei etwa 70 % Umsatz wieder ein Grenzwert erreicht war. Nach nochmaliger Temperatursteigerung auf 217 °C wurde endlich der einer praktisch vollständigen Konvertierung entsprechende Druck erreicht. Das beobachtete Temperaturverhalten macht deutlich, daß trotz einer geringen katalytischen Aktivität des $Fe(CO)_5$-Alkali-Wasser-Systems unterhalb 180 °C prinzipell keine höheren Ausbeuten als ungefähr 40 % zu erzielen sind. Erst Temperaturen von ca. 220 °C und mehr führen zu im Hinblick auf eine technische Anwendung interessanten $H_2$-Ausbeuten.

Dem $Fe(CO)_5$-System ähnliche Ergebnisse zeigen Mischungen von Wasser, Alkalien und Carbonylverbindungen der Metalle Cr, Mo, W und Co.

Die katalytische Konvertierung mit Metallcarbonylen läuft offenbar u.a. intermediär über Hydridometallcarbonylkomplexe, d. h. über Metallverbindungen mit direkt am Metall gebundenem Wasserstoff. Eine katalytisch aktive Phase kann dementsprechend hergestellt werden, indem ein Metallcarbonyl und eine Base oder aber Hydridometallcarbonylkomplexe direkt eingesetzt werden oder Vorläufer dieser Verbindungen, welche in einem vorgeschalteten Prozeß oder erst unter den Reaktionsbedingungen selbst das Metallcarbonyl oder Hydridometallcarbonyl bilden. So entsteht z. B. $Fe(CO)_5$ direkt aus metallischem Fe, Fe-II-Verbindungen oder mehrkernigen Eisencarbonylen (z. B. $Fe_2(CO)_9$, $Fe_3(CO)_{12}$) durch Reaktion mit dem vorhandenen CO. Dementsprechend läßt sich das $Fe(CO)_5$ durch diese Substanzen ersetzen. Ähnlich reagieren mehrkernige anionische Eisenkomplexe mit CO zum Hydridotetracarbonylferrat-Anion ($HFe(CO)_4^-$), beispielsweise $Fe_2(CO)_8^{2-}$ und $HFe_3(CO)_{13}^{2-}$. Die Verwendung solcher Verbindungen — mit oder ohne zusätzliche Base — führt also ebenfalls zu katalytisch aktiven Mischungen. Diese Beispiele sollen illustrieren, daß jede Verbindung, oder Mischungen solcher, zur Herstellung der Katalysatorlösung geeignet sind, welche sich zu Metallcarbonyl oder Hydridocarbonylmetallat oder höheren Analogen mit

direkt am Metall gebundenen Hydrid-Wasserstoff umsetzen oder mit diesen im chemischen Gleichgewicht stehen.

Als Basen sind alle Verbindungen geeignet, welche mit Wasser Hydroxylionen, unter Umständen erst unter den Reaktionsbedingungen, freisetzen, vorzugsweise die Alkalimetall- und Erdalkalimetallhydroxide, -carbonate und -hydrogencarbonate, speziell Natriumcarbonat und Natriumhydrogencarbonat.

Allgemein läßt sich das Verfahren so durchführen, daß Wasser und Katalysatorkomponente(n) mit CO oder einem CO-reichen Gas in einem Druckgefäß bei Temperaturen von 190 bis 300 °C, vorzugsweise 200 bis 270 °C und Kohlenoxidpartialdrucken von 40 bis 500 bar, vorzugsweise 40 bis 100 bar, durch inniges Vermischen von flüssiger und gasförmiger Phase zur Reaktion gebracht werden. Die anzuwendende Konzentration von Metallkomponente und Basenkomponente ist abhängig von der Art der Komponenten und den Reaktionsparametern Temperatur und Druck. Der CO-Partialdruck kann in weiten Grenzen variiert werden, darf aber den CO-Zersetzungsdruck der Metallcarbonyle nicht unterschreiten. Der Zusatz organischer Lösungsmittel, wie Äther und Alkohole, kann von Vorteil sein.

Definition einiger im folgenden verwendeten Begriffe :

1. Produktgas-Zusammensetzung
$X_{H2}$ = Molenbruch des Wasserstoffs im Produktgas,
$X_{CO_2}$ und $X_{CO}$ analog.
2. $H_2$-Ausbeute = $X_{H_2} \cdot (X_{H_2} + X_{CO})^{-1}$
3. Formal durchlaufene Anzahl Katalysecyclen, bezogen auf eingesetztes Metall ($Z_M$) und eingesetzte Base ($Z_B$) :
$Z_M$ = $H_2$-Ausbeute · CO-Einsatzt (Mol) · Metalleinsatz$^{-1}$ (Mol$^{-1}$)
$Z_B$ = $H_2$-Ausbeute · CO-Einsatz (Mol) · Baseneinsatz$^{-1}$ (Mol$^{-1}$)

## Beispiel 1

1.96 g (0.01 Mol) $Fe(CO)_5$ wurden zusammen mit 1.06 g (0.01 Mol) wasserfreiem Natriumcarbonat ($Na_2CO_3$) und 100 g (5.56 Mol) Wasser in einem 500 ml Schüttelautoklaven, welcher einschließlich der Armaturen in Edelstahl, Din 1.4571, ausgeführt war, unter Sauerstoffausschluß mit 48 bar Anfangsdruck CO (0.8 Mol) aufgepreßt und unter Schütteln auf 222 °C geheizt. Während der gesamten Versuchdauer wurde die Autoklaveninnentemperatur mit einem Eisen-Konstantan-Thermoelement und der Innendruck mit einem Manometer gemessen.

In Tabelle 1 sind die Meßwerte Druck, Temperatur und Reaktionszeit zusammengefaßt.

Produktgaszusammensetzung : $X_{H2}$ 0.493, $X_{CO_2}$ 0.414, $X_{CO}$ 0.093, $Z_M$ 67, $Z_B$ 67, $H_2$-Ausbeute 84.1 %.

Tabelle 1

| Reaktionszeit (h) | Temperatur (°C) | Druck (bar) |
|---|---|---|
| 0 | 20 | 48 |
| 0.3 | 130 | 72 |
| 0.7 | 185 | 91 |
| 1.0 | 200 | 109 |
| 1.3 | 210 | 125 |
| 1.5 | 217 | 142 |
| 1.9 | 219 | 154 |
| 2.1 | 220 | 162 |
| 2.8 | 221 | 172 |
| 3.3 | 222 | 178 |
| 3.4 | 222 | 180 |
| 4.1 | 222 | 184 |
| 4.4 | 222 | 184 |

## Beispiel 2

Ein gleicher Ansatz wie in Beispiel 1 wurde stufenweise erst auf 181 °C erhitzt, dann auf 198 und 217 °C. Die zugehörigen Meßwerte sind in Tabelle 2 aufgeführt.

$X_{H_2}$ 0.494, $X_{CO_2}$ 0.427, $X_{CO}$ 0.079, $H_2$-Ausbeute 86.2 %, $Z_M$ 69, $Z_B$ 69.

Tabelle 2

| Reaktionszeit (h) | Temperatur (°C) | Druck (bar) |
|---|---|---|
| 0 | 20 | 48 |
| 0.5 | 176 | 87 |
| 0.7 | 183 | 90 |
| 0.8 | 178 | 90 |
| 1.0 | 178 | 92 |
| 1.5 | 181 | 98 |
| 2.0 | 185 | 104 |
| 3.0 | 181 | 107 |
| 4.0 | 181 | 111 |
| 5.0 | 181 | 113 |
| 5.5 | 181 | 114 |
| 6.0 | 181 | 115 |
| 6.4 | 185 | 117 |
| 6.9 | 190 | 122 |
| 7.3 | 193 | 124 |
| 7.8 | 196 | 129 |
| 8.0 | 198 | 137 |
| 8.9 | 198 | 141 |
| 10.0 | 198 | 145 |
| 11.0 | 198 | 146 |
| 12.0 | 198 | 147 |
| 12.2 | 205 | 150 |
| 12.9 | 215 | 168 |
| 13.4 | 217 | 174 |
| 13.8 | 217 | 177 |
| 14.7 | 217 | 179 |

Beispiel 3

4.9 g (0.025 Mol) $Fe(CO)_5$ wurden in 100 g 1-molarer KOH durch sechsstündiges Rühren vei 60 °C unter Sauerstoffausschluß (Argon-Schutzgasatmosphäre) gelöst. Die entstandene braungelbe Lösung von Kaliumhydridotetracarbonylferrat ($KHFe(CO)_4$) wurde in dem 500 ml Schüttelautoklaven mit 46 bar CO-Anfangsdruck (0.77 Mol) bei 260 °C umgesetzt. Nach 5.5 Stunden (1.5 h Aufheizzeit, 4 h isotherm bei 260 °C, Enddruck 210 bar) wurde eine Gasprobe entnommen. Gasanalyse : $X_{H_2}$ 0.489, $X_{CO_2}$ 0.452, $X_{CO}$ 0.060, $H_2$-Ausbeute 89.1 %, $Z_M$ 27, $Z_B$ 9.

Beispiele 4 bis 13

Die Beispiele 4 bis 13 wurden analog Beispiel 1 durchgeführt. Die Versuchsparameter und -ergebnisse sind in Tabelle 3 zusammengefaßt.

(Siehe die Tabelle 3 Seite 7)

Tabelle 3

| Beisp. Nr. | Metallcarbonyl (mmol) | | Base (mmol) | | Wasser (mol) | Kohlenoxid (mol) | Co-Anfangsdruck (bar) | Enddruck (bar) | Reaktionstemperatur (°C) | Reaktionszeit (h) | Produktgas-Analyse | | | $H_2$-Ausbeute (%) | Katalysecyclenzahl | |
|---|---|---|---|---|---|---|---|---|---|---|---|---|---|---|---|---|
| | | | | | | | | | | | $X_{H_2}$ | $X_{CO_2}$ | $X_{CO}$ | | $Z_M$ | $Z_B$ |
| 4 | 10 | $Fe(CO)_5$ | 30 | KOH | 5.56 | 0.77 | 46 | 202 | 220-250 | 4 | 0.485 | 0.473 | 0.042 | 92.0 | 71 | 24 |
| 5 | 2.5 | $Fe(CO)_5$ | 7.5 | KOH | 2.78 | 0.86 | 46 | 195 | 220-250 | 5 | 0.437 | 0.454 | 0.109 | 80.0 | 276 | 92 |
| 6 | 10 | $Fe(CO)_5$ | 10 | NaOH | 5.56 | 1.63 | 98 | — | 210-250 | 8 | 0.512 | 0.458 | 0.030 | 94.5 | 154 | 154 |
| 7 | 25 | $Fe(CO)_5$ | 25 | $K_2CO_3$ | 5.56 | 0.67 | 40 | 170 | 200-217 | 3 | 0.473 | 0.488 | 0.039 | 92.4 | 25 | 25 |
| 8 | 25 | $Fe(CO)_5$ | 25 | $Na_2CO_3$ | 5.56 | 0.73 | 44 | 181 | 200-221 | 5 | 0.472 | 0.449 | 0.079 | 85.7 | 25 | 25 |
| 9 | 10 | $Fe(CO)_5$ | 20 | $NaHCO_3$ | 5.56 | 0.80 | 48 | 188 | 210-220 | 5 | 0.503 | 0.433 | 0.064 | 88.8 | 71 | 36 |
| 10 | 5 | $Cr(CO)_6$ | 10 | KOH | 2.22 | 0.31 | 46 | 190 | 235-254 | 4 | 0.489 | 0.468 | 0.043 | 91.9 | 57 | 28 |
| 11 | 5 | $Mo(CO)_6$ | 10 | KOH | 2.22 | 0.31 | 46 | 195 | 255-266 | 3 | 0.501 | 0.455 | 0.044 | 91.9 | 57 | 28 |
| 12 | 5 | $W(CO)_6$ | 10 | KOH | 2.22 | 0.31 | 46 | 171 | 245-255 | 4 | 0.463 | 0.450 | 0.087 | 84.2 | 52 | 26 |
| 13 | 5 | $CO_2(CO)_8$ | 10 | KOH | 2.22 | 0.31 | 46 | 203 | 260-264 | 7 | 0.480 | 0.467 | 0.053 | 90.1 | 56 | 28 |

Beispiele 14-27 : Kontinuierliche Anlage

Die Apparatur bestand aus einem durch Ölumlauf beheizten senkrecht angeordneten Reaktionsrohr von 1,3 l Inhalt (2 000 mm lang, 28 mm Innendurchmesser), einem aufgesetzten ebenfalls beheizten Rohr von 1,7 l Inhalt (670 mm lang, 56 mm Innendurchmesser), das zur Trennung von Gasphase und Flüssigkeit diente, und einem wassergekühlten Rückflußaufsatz (620 mm lang, 56 mm Innendurchmesser). Über eine Dosierpumpe wurde zu Beginn der Versuchsserie am unteren Ende des Reaktionsrohres eine wässrige Natriumcarbonat-Lösung (0,1 %, 1 % bzw. 10 %) eingepumpt. Die Füllhöhe wurde über ein am oberen Ende des Reaktionsrohres angebrachtes Überlaufventil eingestellt. Das durch Umsetzung verbrauchte Wasser wurde über die Pumpe jeweils ergänzt. Kohlenmonoxid wurde mit Hilfe eines druckseitig isobar arbeitenden Kompressors durch ein mit Eisenpentacarbonyl gefülltes Druckgefäß (700 ml Inhalt, 250 ml Eisenpentacarbonyl) und einen ölbeheizten Vorheizer in das untere Ende des Reaktors gepresst. Die Thermostatisierung des Druckgefäßes und der an-schließendem zum Vorheizer führenden Kapillare erlaubte die Einstellung eines definierten Partialdruckes von Eisenpentacarbonyl. Über ein Entspannungsventil am Kopf des Kühlers wurde die Gasentnahme gesteuert und über eine Gasuhr registriert. Die Gasanalysen wurden in bestimmten Zeitintervallen mit Hilfe eines Gasanalysators (Orsat) durchgeführt. Die Temperatur wurde im oberen Drittel des Reaktionsrohres gemessen.

Die Prozeßparameter, Meßergebnisse und die daraus berechneten Größen der Beispiele 14-27 sind in Tabelle 4 angeführt und wie folgt definiert :

($Na^+$) Konzentration an Natriumionen in mol/l in der wässrigen Phase

P Gesamtdruck in bar, gemessen am Reaktorkopf

T Reaktortemperatur in °C

$T_{Fe(CO)_5}$ Temperatur des Eisencarbonyls in °C

$P_{Fe(CO)_5}$ Partialdruck des Eisencarbonyls in bar

Gasausstoß Gasentnahme in l/h (bezogen auf 20 °C und Atmosphärendruck)

Einsatz CO aus Gasausstoß und Wasserstoffausbeute berechneter Kohlenmonoxid-Einsatz in l/h (bezogen auf 20 °C und Atmosphärendruck)

Einsatz $Fe(CO)_5$ aus Einsatz CO (bezogen auf die aktuellen Prozeßparameter $T_{Fe(CO)_5}$ und P) und $P_{Fe(CO)_5}$ berechneter Eisenpentacarbonyl-Einsatz in g/h

$CO/Fe(CO)_5$ berechnetes molares Kohlenmonoxid-Eisenpentacarbonyl Verhältnis am Reaktoreingang

Ausstoß $H_2$ aus Gasausstoß und Wasserstoffausbeute berechnete Produktionsrate des Wasserstoffs in l/h (bezogen auf 20 °C und Atmosphärendruck)

In den Beispielen 14-22 wurden Temperatur, Druck, Partialdruck des Eisenpentacarbonyls und der Durchsatz an Kohlenmonoxid variiert, wobei einmaliges Durchleiten des Kohlenmonoxids durch die Flüssigphase Umsätze (= Wasserstoffausbeuten) bis zu 70 % ergab. Wie Beispiele 20 und 22 bzw. 17 und 21 zeigen, ist die Temperatur der entscheidende Prozeßparameter, der hohe Umsätze erlaubt. Beschicken des Reaktionsrohres mit Füllkörpern (zylindrischen $V_2A$-Drahtnetzen, 6 mm Durchmesser, Beispiele 23-27) ermöglicht bei gleichen Ausbeuten offensichtlich etwas höhere Durchsätze. Einpumpen einer 10-prozentigen anstelle einer 1-prozentigen wässrigen Natriumcarbonatlösung hat keinen nennenswerten Einfluß, dagegen fällt die Aktivität einer 0,1-prozentigen Lösung deutlich ab (Beispiele 26 und 27).

(Siehe die Tabelle 4 Seite 9)

Tabelle 4

Prozeßparameter und Ergebnisse der kontinuierlich betriebenen Anlage.
a) Reaktionsrohr und Füllkörper (zylindrische $V_2A$-Drahtnetze, 6 mm Durchmesser) beschickt.

| Beispiele | $(Na^+)$ (mol/l) | P (bar) | T (C°) | $T_{Fe(CO)_5}$ (C°) | $P_{Fe(CO)_5}$ (bar) | Gasausstoß (l/h) | Wasserstoffausbeute, % | Einsatz CO (l/h) | Einsatz $Fe(CO)_5$ (g/l) | $CO/Fe(CO)_5$ (mol/mol) | $Z_M$ (mol/mol) | Ausstoß $H_2$ (l/h) |
|---|---|---|---|---|---|---|---|---|---|---|---|---|
| 14 | 0,2 | 55 | 220 | 25 | 0,043 | 247 | 32 | 188 | 1.4 | 1 080 | 350 | 60 |
| 15 | 0,2 | 55 | 220 | 60 | 0,200 | 240 | 41 | 170 | 5.0 | 270 | 110 | 70 |
| 16 | 0,2 | 43 | 220 | 60 | 0,200 | 240 | 27 | 190 | 7.0 | 220 | 60 | 51 |
| 17 | 0,2 | 80 | 220 | 60 | 0,200 | 245 | 47 | 167 | 3.4 | 400 | 190 | 78 |
| 18 | 0,2 | 120 | 220 | 60 | 0,200 | 245 | 47 | 167 | 2.2 | 600 | 280 | 78 |
| 19 | 0,2 | 80 | 220 | 60 | 0,200 | 504 | 39 | 363 | 7.3 | 400 | 160 | 142 |
| 20 | 0,2 | 80 | 220 | 60 | 0,200 | 100 | 49 | 67 | 1.3 | 400 | 200 | 33 |
| 21 | 0,2 | 80 | 234 | 60 | 0,200 | 252 | 61 | 156 | 3.1 | 400 | 240 | 95 |
| 22 | 0,2 | 80 | 234 | 60 | 0,200 | 100 | 70 | 59 | 1.2 | 400 | 280 | 49 |
| 23 | 0,2 | 80 | 220 | 60 | 0,200 | 240 | 56 | 154 | 3.1 | 400 | 220 | 86 |
| 24 | 0,2 | 80 | 234 | 60 | 0,200 | 240 | 67 | 144 | 2.9 | 400 | 270 | 96 |
| 25 | 0,2 | 80 | 234 | 60 | 0,200 | 110 | 70 | 65 | 1.3 | 400 | 280 | 46 |
| 26 | 2,0 | 80 | 238 | 60 | 0,200 | 258 | 64 | 157 | 3.1 | 400 | 260 | 100 |
| 27 | 0,02 | 80 | 238 | 60 | 0,200 | 250 | 53 | 155 | 3.1 | 400 | 210 | 82 |

**Ansprüche**

1. Verfahren zur Herstellung von Wasserstoff durch homogen katalysierte Konvertierung von Kohlenmonoxid und Wasser zu Kohlendioxid und Wasserstoff unter Verwendung einer Carbonylverbindung der Metalle Fe, Co, Cr, Mo und/oder W als Katalysator in Form einer wässrigen basischen Lösung, dadurch gekennzeichnet, daß man Kohlenmonoxid mit Wasser und einem der genannten Metallcarbonyle bei Temperaturen von 190 bis 300 °C und bei Kohlenmonoxid-Partialdrucken zwischen 40 und 500 bar umsetzt.

2. Verfahren nach Anspruch 1, dadurch gekennzeichnet, daß die Reaktion bei Temperaturen zwischen 200 und 270 °C durchgeführt wird.

3. Verfahren nach Ansprüchen 1 und 2, dadurch gekennzeichnet, daß die Reaktion bei 50 bis 100 bar durchgeführt wird.

4. Verfahren nach Ansprüchen 1-3, dadurch gekennzeichnet, daß man als wässrige Base Hydroxide der Alkalimetalle oder Erdalkalimetalle einsetzt.

5. Verfahren nach Ansprüchen 1-3, dadurch gekennzeichnet, daß man als wässrige Base eine schwache Base einsetzt, die aus den Carbonaten und Hydrogencarbonaten der Alkalimetalle und Erdalkalimetalle ausgewählt ist.

6. Verfahren nach Anspruch 5, dadurch gekennzeichnet, daß man als schwache Base Natriumcarbonat einsetzt.

7. Verfahren nach Ansprüchen 1-6, dadurch gekennzeichnet, daß als Carbonylverbindung Eisenpentacarbonyl eingesetzt wird.

8. Verfahren nach Ansprüchen 1-7, dadurch gekennzeichnet, daß die schwache Base und die Metallcarbonylverbindung in einem Molverhältnis zwischen 1 und 3 : 1 verwendet werden.

**Claims**

1. A process for producing hydrogen by means of a homogeneously catalyzed conversion of carbon monoxide and water into carbon dioxide and hydrogen using a carbonyl compound of the metals Fe, Co, Cr, Mo, and/or W as the catalyst in the form of an aqueous basic solution, characterized in that carbon monoxide is reacted with water and one of said metal carbonyls at a temperature from 190 °C to 300 °C and at a carbon monoxide partial pressure between 40 and 500 bar.

2. The process according to claim 1, characterized in that the reaction is carried out at a temperature between 200 °C and 270 °C.

3. The process according to any of claims 1 and 2, characterized in that the reaction is carried out at from 50 to 100 bar.

4. The process according to any of claims 1 through 3, characterized in that hydroxides of the alkali metals or alkaline earth metals are used as the aqueous base.

5. The process according to any of claims 1 through 3, characterized in that a weak base selected from the carbonates or hydrogen carbonates of the alkali metals or alkaline earth metals is used as the aqueous base.

6. The process according to claim 5, characterized in that sodium carbonate is used as the weak base.

7. The process according to any of claims 1 through 6, characterized in that iron pentacarbonyl is used as the carbonyl compound.

8. The process according to any of claims 1 through 7, characterized in that the weak base and the metal carbonyl compound are used in a molar ratio of from 1 to 3 : 1.

**Revendications**

1. Procédé de production d'hydrogène par conversion catalysée d'une manière homogène de monoxyde de carbone et d'eau en dioxyde de carbone et hydrogène, en utilisant un composé carbonyle des métaux Fe, Co, Cr, Mo et/ou W en tant que catalyseur sous la forme d'une solution aqueuse basique, caractérisé en ce que l'on fait réagir le monoxyde de carbone sur l'eau et sur l'un des métal-carbonyles mentionnés ci-dessus à des températures de 190 à 300 °C, à des pressions partielles du monoxyde de carbone comprises entre 40 et 500 bar.

2. Procédé selon la revendication 1, caractérisé en ce que la réaction est réalisée à des températures comprises entre 200 et 270 °C.

3. Procédé selon l'une des revendications 1 ou 2, caractérisé en ce que la réaction est réalisée à 50 à 100 bar.

4. Procédé selon l'une quelconque des revendications 1 à 3, caractérisé en ce que l'on utilise, en tant que base aqueuse, des hydroxydes des métaux alcalins ou alcalinoterreux.

5. Procédé selon l'une quelconque des revendications 1 à 3, caractérisé en ce que l'on utilise, en tant que base aqueuse, une base faible choisie parmi les carbonates et hydrogénocarbonates des métaux

alcalins et alcalino-terreux.

6. Procédé selon la revendication 5, caractérisé en ce que l'on utilise, en tant que base faible, du carbonate de sodium.

7. Procédé selon l'une quelconque des revendications 1 à 6, caractérisé en ce que l'on utilise, en tant que composé carbonyle, du fer-pentacarbonyle.

8. Procédé selon l'une quelconque des revendications 1 à 7, caractérisé en ce que la base faible et le composé métal-carbonyle sont utilisés selon un rapport molaire compris entre 1 et 3 : 1.